# EUROPEAN PATENT SPECIFICATION

(11) **EP 3 901 393 B1**
(45) Date of publication and mention of the grant of the patent: **04.10.2023**
(21) Application number: 21169913.7
(22) Date of filing: 22.04.2021
(51) Int. Cl.: E04F 15/18, E04F 15/20

(54) **INSULATING FLOOR MATERIAL AND METHOD FOR PRODUCING SUCH MATERIAL**
ISOLIERENDES BODENMATERIAL UND VERFAHREN ZUR HERSTELLUNG EINES SOLCHEN MATERIAL
MATÉRIAU DE PLANCHER ISOLANT ET PROCÉDÉ DE FABRICATION DUDIT MATÉRIAU

(30) Priority: 23.04.2020 SK 500382020 U
(43) Date of publication of application: 27.10.2021
(73) Proprietor: AKUFLAT s.r.o., 81103 Bratislava (SK)
(72) Inventor: Forró, Imrich, 930 29 Bodíky (SK)
(74) Representative: Porubcan, Róbert

(56) References cited:
- EP-A1- 3 190 231
- CA-A1- 2 553 302
- FR-A1- 2 318 285
- IT-B1- 1 426 203
- KR-A- 20090 016 266

## Description

### Field of technology

The invention concerns a material designed for acoustic and partially heat insulation of the floors, where the insulating floor material is between the hardcore layer and slab of the floor or ceiling construction. The invention also discloses various methods of production and application of the insulating floor material.

### Prior state of the art

Solid insulation boards, for example made of foam or extruded polystyrene or stone wool and so on, are used for insulation of floors. The main task of the insulation is to interrupt the structural transfer of the noise and vibrations between the hardcore layer and the slab in the construction, where the hardcore layer is usually a reinforced concrete and the slab is usually formed by cement or anhydride based screed. The floor insulation also has a heat insulating function in case the floor is placed on the base plate or other such construction in touch with outer environment.

In modern buildings the wiring and piping is installed on the horizontal framework (carrying construction), too, on which the insulating material is placed in such a way, that the wiring and piping (mainly electric wiring and water, sewage and heating piping) are present in the layer of the insulating material; the height of the insulating material is sufficient in order to contain the wiring and piping at places where they cross. When placing the solid insulating boards it is necessary to cut the material in a complicated way so that it surrounds the wiring and piping. Thus problem is addressed by the insulating material in the loos form which is poured on the framework with the wiring and piping placed, until the sufficient height of the insulating material is reached. A solution is known which uses blow-in cellulose insulation; however, it has a low compressive strength and its soundproofing capabilities are low.

Publication US4769271 discloses a rubber insulating sheet (plate) with shaped cavities with loose material. Its disadvantage lies in the fact that the material must be very precisely cut when place on the surface. The rubber foam disclosed in DE102005043721 is used as levelling layer; however, its soundproofing capabilities are negligible due to the thinness of this layer. The soundproofing capabilities of material pursuant to DE3346576 are much better; this material is created by joining and rolling the rubber granulate into the form of sheets (plates). However, such formed insulating material has to be subsequently cut and shaped into a required shape during installation.

Publication IT1426203B1 discloses all the features of the preamble of claim 1 and describes substrate for flat surface of building structures, comprising at least PVC, at least polyethylene and at least rubber in granular form mixed together. Publication KR20090016266 discloses an interlayer noise reduction structure of a building using expanded vermiculite, which is formed by forming a sound insulation layer by spreading many floor sound insulating blocks, which are composed of a synthetic resin sack filled with many expanded vermiculites.

Publication CA2553302 describes a elastomeric playground surface. Playground surface consists of a base layer, a fluid permeable base covering layer, a bag layer, a ground particle layer, and a top cover layer. The bag layer consists of a plurality of bags each filled with loose or shredded rubber, and which are aligned side by side forming a single layer of rows and columns.

Such new solution of floor insulation is desired and not known, which could be easily applied on the surfaces with the installations already in place, which will have good mechanical features and high soundproofing or sound insulating capabilities.

### Essence of the invention

The invention is described in the claims 1 to 15. The abovementioned deficiencies are significantly remedied by the insulating floor material which involves a rubber in granulate form according to this invention which essence lies in the fact that it includes a loose recycled rubber crumb with fraction from 2 mm to 20 mm in the amount at least of 20% of the share of the mass and the rest is supplemented by the crumb from the recycled plastic with fraction up to 15 mm. The loose form constitutes a material without binders (adhesives, etc.), that is, individual particles of the matter are not mutually intertwined with another substance into a solid form, for example into a form of sheet, as known in the prior art. In one of the possible realizations the insulating floor material is formed by the recycled rubber crumb; it is, however, preferable, if the mixture includes, aside from the recycled rubber crumb, a crumb from the recycled plastic, too, usually with a fraction that is smaller than the fraction of the rubber crumb.

The term "crumb" in this file denotes fragmented, disintegrated particles of the solid substance; it can also denote a result of crumbling, crushing, grinding, chopping, shearing, tearing, spalling, smashing, shattering, splitting or other similar separation or processing.

The essential feature of the proposed invention is the use of the rubber recyclate from the rubber, mainly tyres. With suitable size of the separate particles of the rubber ranging from 2 mm to 20 mm, preferably from 5 mm to 15 mm, a loose material with features suitable for the use in floor construction is produced. The used tyres are often only left on the waste dump and they form an environmental burden. The insulating floor material includes the recycled rubber crumb in amount of at least 20% of the mass, preferably at least 25% of the mass, especially preferably at least 50% of the mass. In such amount it is possible to effectively process large amount of tyres. A use of the waste rubber from the production in rubber industry (or tyre industry) is not ruled out, too. The most common source of the rubber crumb will mainly be processed used tyres. The rubber crumb provides the material with good damping (and soundproofing) and hysteresis properties with regard to transfer of the structurally spread noise and vibrations. Individual particles of the crumb are in mutual contact or touch only on certain surface which is produced randomly during cutting, mixing and placing of the crumb. The individual particles of the rubber crumb and crumb from plastic recyclate are not connected by a binder; the resulting insulating material is still in loose form, that is, it is not pressed or connected into a unifying continuous form.

The use of the loose form of insulation is known in the prior art, however, the disadvantage of such use in prior art is the scattering of the material around edges and the need to level the surface into a desired height. These deficiencies are remedied by the insulating floor material which includes loose granulate according to this invention, which essence lies in the fact that it is placed in the closed bags designed for the placement onto horizontal surface. That means that the bags are part of the insulating layer itself. The loose granulate, preferably involving recycled rubber crumb according to the abovementioned description, is poured into bags which, however, form not only a packaging for the purposes of transfer to the construction site, but the bags are part of the final, applied floor insulation; they are thus part of the resulting construction. The new feature of the proposed invention is the form of the product itself, with the use of the bag, which allows to flexibly delimited the outer shape of the loose insulation product and allows it to adjust to the shape of the bedrock (ground), whereby the outer, approximately square or block shape of the product, achieved after the filling of the bag, is maintained.

It is preferable if the bag is produced from the flexible and sufficiently solid material, for example polyethylene foil with thickness up to 1 mm, preferably up to 0,5 mm. After the filling the bag is closed but not gas-proof closed, so that the loose character of the mixture in the bag is maintained. Such state can be achieved for example in such a way that the bag has openings which are small than the lower boundary of the fraction of all materials in the bag, so that the particles itself cannot pour out of the bag. The openings ensure the transfer of the air into and out of the bag. The bag is a flexible, partially malleable barrier which delimits the outer shape of the insulation, whereby it will be basically square or block-shaped with rounded edges.

After the filling and closing of the bag it is preferable if the bags are formed into a basically square or block shape, that is, into a shape where the opposing outer surfaces of the bag are parallel. The edges of the bag will have certain rounding pursuant to the used granulometry of the mixture inside the bag and pursuant to the mechanical features of the material of the bag, too, but in principle the bag will have a shape of the flat square or block which will be placed onto the horizontal surface which is to be insulated. This also makes it easier to stack the bags on the pallet.

The bags with the mixture containing rubber cram are during application (placement) placed tightly side by side in one or multiple layers. The placement of the bags is quick and productive and requires no supporting machines such as pumps, conveyors and so on. The bags can be placed directly through the installation wiring or piping thanks to the fact that the loose freedom of the mixture inside the bag is maintained and thanks to the fact that the bag is not gas-proof closed; the installation wiring and piping is surrounded by the outer surface of the bag and the material inside the bag is distributed into free gaps. In order to ensure this flexibility it is preferable if the bag is filled without too much material inside and therefore it is filled only up to 95% of its volume. That means, for example, that without pressing and with free density of the mixture there are maximum of 57 litres placed inside 60 litre bag.

After one or more layers of bags are placed, the second layer or multiple further layers can be placed pursuant to the desired thickness of the insulation, or a slab is already produced after the first layer of the bags, for example as a cement slab (or cement screed).

The bags can be produced in multiple groundplan dimensions with the same thickness so that the floors of various sizes and shapes can be construed. In order to cover the whole desired surface of the floor, the bags can be placed in such a way that they are placed within the edges of the floor tightly side by side and the eventual gaps where the respective size of the bag does not fit are filled with the mixture poured out of an open bag. A combination of poured layer with a layer made out of placed bags is also possible.

The proposed invention effectively combines the advantages of the loose insulation matter with the solidity of the insulation plates, sheets or boards, thanks to which the placement of the insulation onto surfaces with wiring and piping already installed is simplified, and at the same time the work is clean and the smooth flat surface without the need for levelling is achieved. The usage of the bags in the final construction as constant carriers of the mixture is preferable in case of any composition of the loose mixture, but it is especially preferable in case of mixture pursuant to the abovementioned description. The rubber crumb has not only acoustic insulating features, but in the disclosed fraction it is easily applied and it easily fills the gaps between the installation wiring and piping, whereby it achieves sufficient flatness of the upper surface of the bag, where the slab is subsequently applied.

From the point of view of achieving high soundproofing or acoustic insulating capabilities while maintaining the installation simplicity it is preferable if the crumb of the plastic recyclate is produced with a mean fraction less than the mean fraction of the rubber crumb, whereby the plastic recyclate advantageously fills in the gaps between the particles of the rubber crumb and thereby increases the pressure solidity of the insulating floor material. The plastic recyclate is preferably formed by the waste from various fields of industry. A mixture proved preferable where the rubber crumb forms 25% of the mass with fraction between 5 mm to 15 mm. Subsequently, 25% of the mass is formed by the waste from the electric cables insulation with fraction between 0,2 mm to 1 mm, and the remaining 50% of the mass are formed by the waste polypropylene with fraction between 2 mm to 10 mm. In such a composition one achieves not only excellent insulating characteristics of the resulting insulating floor material, but the waste without effective recycling use is consumed, too.

The waste polypropylene, for example in form of foam polypropylene, is produced in packaging industry. The electric cables insulation material can be polyvinyl chloride, or high-pressure or low-pressure polyethylene, polyurethane, polyamide, polybutylene-tetraphthalate, polytetrafluoroethylene, tetrafluoroethylene-hexafluoropropylene, ethylene-tetrafluoroethylene, perfluoroalkoxy polymer, rubber chloroprene, rubber silicone, ethylene vinyl acetate, ethylene-propylene rubber, elastomer of thermoplastic polyolefin or polyester, styrene copolymer and triblock.

The deficiencies in the prior state of the art are significantly remedied by the production of the insulating floor material itself, too, which includes a disintegration of the rubber material, according to this invention, which essence lies in the fact that the rubber material is crushed into the particles with size between 2 mm to 20 mm, it is filled into the bags without pressing; the bags are closed and formed into a shape of the flat block or square.

The method of the production of the insulating floor material can in preferable arrangement include the processing of the used or discarded tyres, where firstly the circumferential cords are mechanically torn out of the tyres - provided a tyre contains such cords. The larger tyres can be cut by means of the hydraulic shears into a smaller pieces, for example, into quarters of original sizes, so that they can move without clogging in the low-speed crusher hopper, where they are subsequently transferred by, for example, belt conveyor. In the low-speed crusher the tyres are crushed into the parts whose size ranges from 8 to 20 cm; such pieces can be called "chips". Subsequently these parts are transferred into a shaft mill where they are divided into the rubber crumb with a desired fraction, for example to 20 mm.

Behind the shaft mill there is, preferably, a separator of the metal elements which rids the crumb of wires, steel cord remnants or also foreign bodies stuck in the tyre such as nails, screws and so on. At this stage the rubber crumb has a desired form for the purposes of its mixing into the resulting insulating floor material, or it is a single components of this insulating floor material.

The mixing device can contain a screw conveyer into the input of which the transfer outputs from all three hoppers for three main components of the insulating floor material are attached. Pursuant to the recipe of choice, that is, the chosen ration of the components, the individual components are led to the input of the screw conveyer - the components being, for example, rubber crumb, granulate from insulation of electric wires and cables, foam polypropylene granulate; in the screw conveyor the components are mixed into the homogenous mixture and this is pushed into the belt conveyor by which the mixture is transferred to the vertical packing device. The packing device packs the mixture into bags whose volume ranges between 20 and 40 litres, whereby the mixture falls into the bags freely. The bags are subsequently closed by sealing, whereby in the vicinity of the weld there is a group of punctured openings in order to keep the bags non-gas-proof. After the closing the bag or the group of bags is formed by a press into the shape of the flat block or square and the bags are loaded on the pallet.

The insulating floor material according to this invention has excellent soundproofing characteristics, it is easily installed in the loose form or in the bags, and its heat insulating characteristics are also good; it does not support the spread of fire and it is very ecological or environment-friendly. During its production the waste from other industrial fields is processed, especially the waste which otherwise lacks any recycling potential and is usually only stored in the dump. Pursuant to the realized tests, the insulating floor material is not harmful to the environment by presence of the dangerous particles or gases, and it is not harmful to the environment by a presence of humidity in the building constructions or in inner surfaces of the construction site.

The high durability of the insulating floor material is likewise its important advantage, since the acoustic features are maintained even after long-term intensive use.

Last but not least, the economic and environmental features of the production are advantageous, too, with the production being cheap, environment-friendly, with low energy consumption and without consumption of technological water, thanks to which the insulating floor material can have the lowest cost/effect (achieved sound insulating characteristics) ratio.

### Description of drawings

The invention is further disclosed by means of drawings 1 to 6. The depicted ratios of height and length of the bag, the shape of the granulate, the depicted groundplan of the floor, and so on, are only examples and these details cannot be interpreted as limiting the scope of protection.
Figure 1 is schematic depiction of the processing of the tyre in multiple steps.
Figure 2 is a scheme of depiction of the elements into a production line.
Figure 3 depicts an example with the bag filled with mixture after it is formed approximately into the shape of the block. In the right lower corner of the bag the cross-sectional view inside is suggested.
Figure 4 is cross-section of the layers of the floor with the insulating floor material in the loose form without bags, and subsequently the figure 5 depicts a realization where the mixture is placed in the bags and these are combined with the loose version of the material.
Figure 6 is a groundplan of the distribution of the bags when placed on the base of the floor.

### Examples of realization

### Example 1

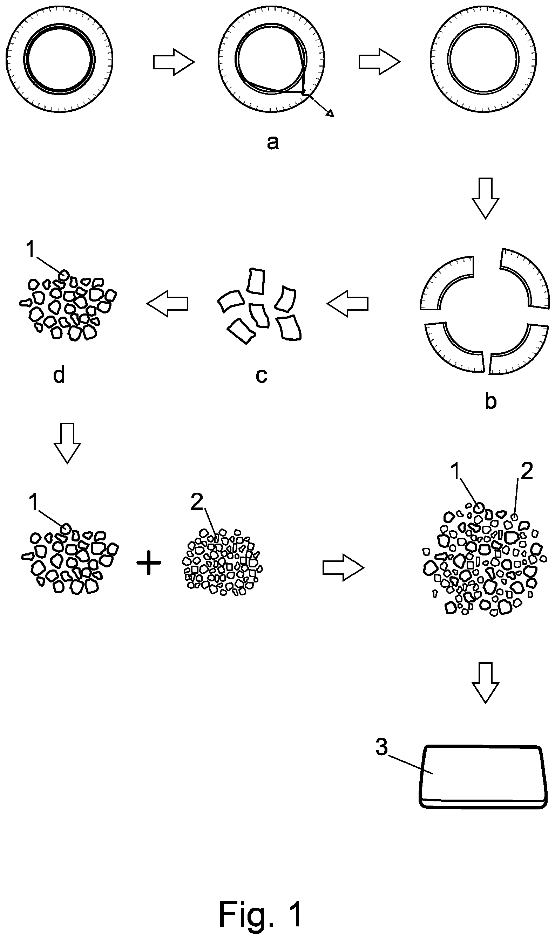

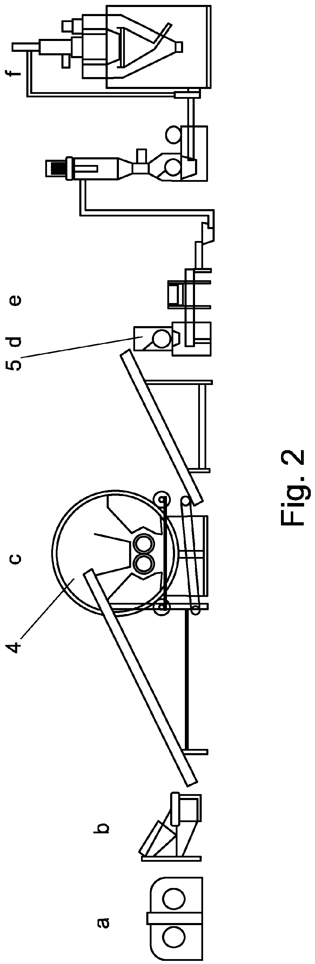

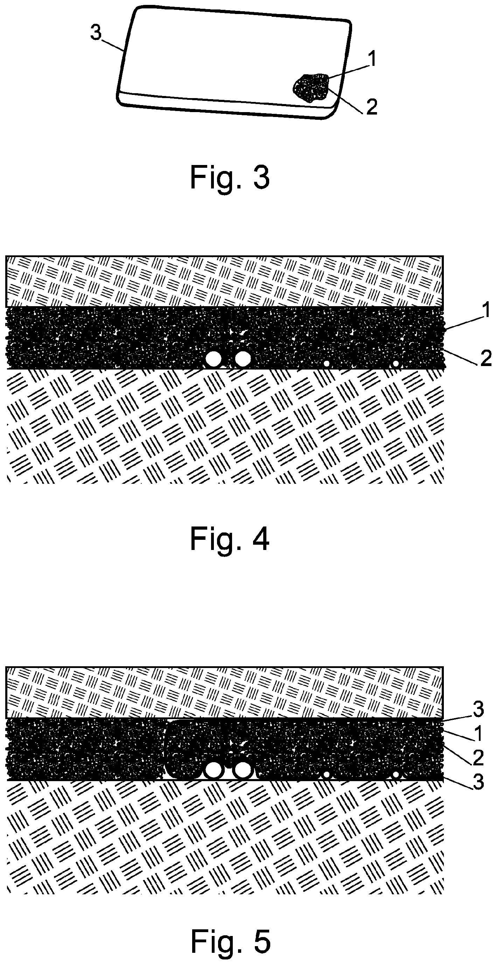

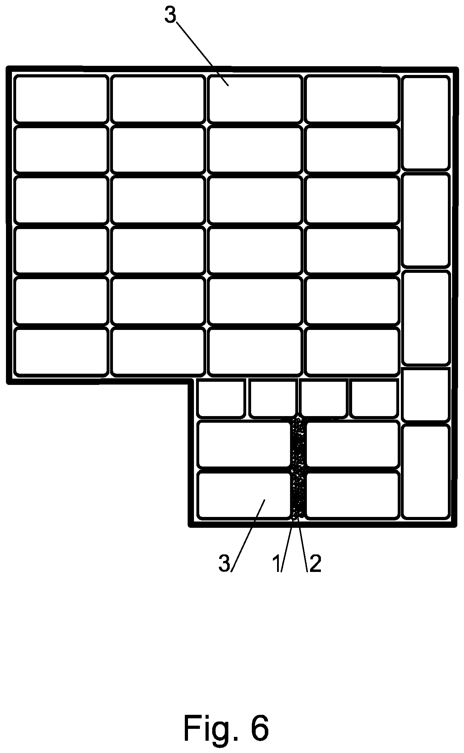

In this example according to figures 1, 2, 3, 5 and 6 the insulating floor material is formed by a mixture of the rubber crumb 1 and the crumb 2 of the plastic recyclate. The rubber crumb 1 from used and discarded tyres, together with the remnants of the textile cord, has a fraction ranging from 5 mm to 15 mm and the share of the mixture in the mass is approximately 25%. The mixture further contains crushed waste from the electric cables insulation with fraction between 0,2 mm to 1 mm, forming 25% of the mass. The remaining 50% of the mass are formed by the waste polypropylene with fraction between 2 mm to 10 mm.

In this example the waste from the electric cables insulation and the waste polypropylene are transferred to the place of production of the insulating floor material already in the form of the granulate with abovementioned fractions. The waste from the electric cables insulation can originate in the processing and mining of the metals from the remnants of electric cables. The source of the waste polypropylene can be a packaging production or production of semifinished products for the furniture industry. In this example the rubber crumb 1 is produced by processing the used and discarded tyres in place of production of the insulating floor material.

The tyres are first selected pursuant to the size in such a way that they can fit the hopper of the low-speed crusher 4. The larger tyres can be cut into smaller parts by hydraulic shears. Steel cords can be torn out of the tyres for trucks.

In the low-speed crusher 4 and at the common environment temperature the tyres are - without previous chemical treatment and eventually even without washing - divided into chips with size ranging from 5 cm to 15 cm. In this example the crusher 4 has a capacity of 3 tons per hour. The chips fall onto the conveyor belt which transfers them into the shaft mill 5 in which the chips are crushed into the final rubber crumb 1 with the desired fraction; in this example 5 mm to 15 mm. The progressing rubber crumb 1 moves on the belt conveyor where by its end the magnetic strip is transversally positioned; this strip removes the metal particles, mainly wires, from the rubber crumb 1, and these can be subsequently used, for example, as a reinforcement of the screed or (reinforced) concrete.

The rubber crumb 1 is subsequently transferred into the storage tank. The production technology in this example includes three storage tanks for each components of the resulting mixture. All three storage tanks are connected with the screw conveyor which functions as a mixing device in which the individual components are mixed, pursuant to the recipe of choice, into basically homogenous mixture. A scale at the output from the storage tanks can be used to measure the amount of components, or flow meter or some similar device.

The resulting mixed mixture is pushed from the screw conveyor onto the skewed belt conveyor and it is carried up into the vertical packing device for the packing of the mixture into bags 3. The bag 3 with volume of 20 to 40 I is from polyethylene foil with the thickness 0,45 mm. The bags 3 are closed by heat welding by means of heated bar which creates a tight closing of the edge of the bag 3. In order to achieve air permeability of the bag 3 there is a group of punctured openings by the welded/sealed edge which do not allow the particles of the mixture to fall out of the bag 3, but which allows a bidirectional flow of the air. When packing the bags the amount is measured by the scales in such a way that the mixture inside the bag 3 is not compressed too much and that it can move to some degree, which is ensures the good forming of the surface of the bag 3 around the wiring and piping installed on the floor.

After filling and closing the mixture in the bag 3 is settled in order to achieve the most even distribution inside the available volume of the closed bag 3. For example, rotating square bodies in the conveyor can be used for this purpose. Subsequently the bag 3 is pressed between the two parallel surfaces, for example between two parallel conveyor belts led one above the other, which press the bag 3 into 6 cm or 8 cm, whereby the surplus air is pressed out of the bags 3. Such formed bag 3 is ready to be placed onto insulated floor. The manipulator takes the bags 3 out of the end of the conveyor and stacks them onto the pallet.

### Example 2

In this example according to figures 1, 2 and 4 the insulating floor material is formed by the loose mixture from rubber crumb 1 forming 50% of the mass, whereby the other 50% of the mass are formed by the crumb 2 plastic recyclate from polyurethane. The mixture is used in the floor of ceiling construction as an insulation of the noise transferred by steps and air. In the loose form the mixture is placed between the hardcore layer and slab of the ceiling construction where it functions as levelling and sound insulating layer. It also has an effect of heat insulation. The loose mixture excellently and tightly follows the surface of the framework (carrying construction) and easily covers the installation wiring and piping place on the framework. The process of placement of the loose mixture is dry and fast. The mixture is environment-friendly and can be later recycled. In this example, the mixture achieves the reduction of the level of step noise by more than 28 dB already at thickness of 45 mm and with cement screed 40 mm thick. The coefficient of the thermal conductivity of the mixture is 0,087 W/m.K and the compressibility pursuant to STN 73 0532 standard is at level of 8%. The loose weight of the mixture in this example is 300 ±30 kg/m³.

### Example 3

In this example according to figures 1, 2 and 4 the insulating floor material is formed by the mixture of rubber crumb 1 and crumb 2 of the plastic recyclate with the ratio of components being similar to example 2, only that the crumb 2 of the plastic recyclate is formed by the polypropylene granulate.

The mixture in this example achieves the reduction of the level of step noise by more than 25 dB already at thickness of 45 mm and with cement screed 40 mm thick. The coefficient of the thermal conductivity of the mixture is 0,096 W/m.K and the compressibility pursuant to STN 73 0532 standard is at level of 9%. The loose weight of the mixture in this example is 290 ±30 kg/m³.

### Example 4

In this example pursuant to figures 1, 2, 3, 5 and 6 the insulating floor material is formed by the mixture of rubber crumb 1 and crumb 2 from the polyurethane-based plastic recyclate (modified GPU). Both components have in the resulting mixture basically similar share of the mass at 50%. The fraction of the rubber crumb 1 is up to 20 mm; the fraction of the crumb 2 from the polyurethane-based plastic recyclate is up to 10 mm.

The mixture is packed into 20 litre and 40 litre bags 3. The index of decrease of the step noise is more than 31 dB. The coefficient of the thermal conductivity λ is 0,096 W/m.K. The volumetric heat capacity c.ρ is 0,212. 10⁶ J/m³.K. The fire reaction is of class E.

### Industrial applicability

The industrial applicability is obvious. According to this invention it is possible to industrially and repeatedly produce and use insulating floor material in form of a loose substance packed and closed in the bags.

### List of symbols

1 - rubber crumb
2 - crumb from the plastic recyclate
3 - bag
4 - crusher
5 - mill

a - tearing out of cords
b - cutting of the tyres into smaller parts
c - dividing into chips
d - dividing into granulate
e - separation of the metal parts
f - separation of the fibres

## Claims

1. An insulating floor material for being located between the hardcore layer and slab of the floor or ceiling construction, and including, in an amount of at least 20% of a mass, a loose recycled rubber crumb (1) with a fraction from 2 mm to 20 mm, and a rest is supplied by a crumb (2) from a plastic recyclate with the fraction up to 15 mm without a binder,
**characterized in that** said insulating floor material
also comprises a closed bag (3) in which said rubber crumb (1) and said plastic crumb (2) are placed in,
whereby a material of the bag (3) is part of a resulting insulating layer and malleably delimits an outer shape of the insulating floor material after its placement on an insulated surface,
whereby the bag (3) has openings which are smaller than the lower fraction of the rubber crumb (1) inside the bag (3).

2. The insulating floor material according to the claim 1, includes the recycled rubber crumb (1) in the amount of at least 25% of the mass, preferably 50% of the mass.

3. The insulating floor material according to the claim 1 or 2, wherein the recycled rubber crumb (1) has the fraction from 5 mm to 15 mm.

4. The insulating floor material according to any of the claims 1 to 3, wherein the material of the bag (3) is a flexible foil up to 1 mm thick, preferably up to 0,5 mm thick; especially preferably the material of the bag (3) is a polyethylene foil.

5. The insulating floor material according to any of the claims 1 to 4, wherein the bag (3) is closed by a heat welding of an edge.

6. The insulating floor material according to any of the claims 1 to 5, wherein the bag (3) is formed into a shape of a block, preferably in the shape of a flat block.

7. The insulating floor material according to any of the claims 1 to 6, wherein the bag (3) is filled in the amount of 95% of its volume at maximum.

8. The insulating floor material according to any of the claims 1 to 7, wherein the crumb (2) from the plastic recyclate is produced with the mean fraction that is smaller than the mean fraction of the rubber crumb (1).

9. The insulating floor material according to any of the claims 1 to 8, wherein the crumb (2) from the plastic recyclate is a waste from electric cables insulation with the fraction from 0,2 mm to 1 mm.

10. The insulating floor material according to the claim 9, wherein the electric cables insulation is made of one of following materials: polyvinyl chloride, high-pressure or low-pressure polyethylene, polyurethane, polyamide, polybutylene-tetraphthalate, polytetrafluoroethylene, tetrafluoroethylene-hexafluoropropylene, ethylene-tetrafluoroethylene, perfluoroalkoxy polymer, rubber chloroprene, rubber silicone, ethylene vinyl acetate, ethylene-propylene rubber, elastomer of thermoplastic polyolefin or polyester, styrene copolymer and triblock.

11. The insulating floor material according to any of the claims 1 to 10, wherein the crumb (2) from the plastic recyclate has the fraction from 2 mm to 10 mm, and is from a polypropylene.

12. The insulating floor material according to any of the claims 9 to 11 consists from the rubber crumb (1) with the fraction from 5 mm to 15 mm, from the waste from the electric cables insulation with the fraction from 0,2 mm to 1 mm, and/or from the polypropylene with the fraction from 2 mm to 10 mm; preferably the share of the rubber crumb (1) ranges from 20% to 30% of the mass, the waste from the electric cables insulation ranges from 20% to 30% of the mass or the polypropylene ranges from 45% to 55% of the mass.

13. A method of a production of an insulating floor material according to any of the preceding claims, which includes a disintegration of a rubber material is **characterized by the fact**, that the used or waste rubber material is crushed into a rubber crumb (1) with particles whose size ranges from 2 mm to 20 mm; the material is filled into bags (3) without pressing; the bags (3) are closed and formed into a shape of a flat block; whereby the bag (3) is a part of a final insulating layer.

14. The method of the production of the insulating floor material according to the claim 13, wherein tyres are firstly crushed in a low-speed crusher (4) into parts whose size ranges from 8 to 20 cm; subsequently these parts are transferred to a shaft mill (5) where they are divided into the rubber crumb (1) with a desired fraction; and granulate from electric conductors insulation and/or foam polypropylene granulate is mixed into the rubber crumb (1), preferably in a mixing device.

15. The method of the production of the insulating floor material according to the claim 13 or 14, wherein the rubber crumb (1) or a mixture including the rubber crumb (1) is filled into the bags (3) by means of a packing device; preferably a volume of the bags (3) is 20 litres and/or 40 litres.

## Patentansprüche

1. Isolierendes Bodenmaterial zwischen der tragenden Schicht und der druckverteilenden Schicht einer Boden- oder Deckenkonstruktion, umfassend mindestens 20 Gew.-% loser Schüttung aus recyceltem Gummikrümel (1) mit einer Fraktion von 2 mm bis 20 mm und dem Rest, ergänzt durch Krümel (2) aus Kunststoffrecyclat mit einer Fraktion von bis zu 15 mm ohne Bindemittel,
**dadurch gekennzeichnet, dass**
auch einen geschlossenen Sack (3) umfasst, in dem Gummikrümel (1) und Krümel (2) eingebracht sind,
wobei das Material des Sackes (3) zum Bestandteil der resultierenden Isolierschicht ist und die äußere Form des isolierenden Bodenmaterials nachgiebig nach seiner Verlegung auf die isolierte Oberfläche begrenzt,
wobei der Sack (3) Öffnungen aufweist, die kleiner als untere Grenze der Fraktion aus Gummikrümel (1) innerhalb des Sackes (3) ist.

2. Isolierendes Bodenmaterial gemäß Anspruch 1, **dadurch gekennzeichnet, dass** es mindestens 25 Gew.-% aus recyceltem Gummikrümel (1), vorzugsweise 50 Gew.-% umfasst.

3. Isolierendes Bodenmaterial gemäß Anspruch 1 oder 2, **dadurch gekennzeichnet, dass** der recycelte Gummikrümel (1) eine Fraktion von 5 mm bis 15 mm aufweist.

4. Isolierendes Bodenmaterial gemäß einem der Ansprüche 1 bis 3, **dadurch gekennzeichnet, dass** das Sackmaterial (3) eine flexible Folie mit einer Dicke bis zu 1 mm, vorzugsweise bis zu 0,5 mm ist, besonders vorzugsweise ist das Sackmaterial (3) eine Polyethylenfolie.

5. Isolierendes Bodenmaterial gemäß einem der Ansprüche 1 bis 4, **dadurch gekennzeichnet, dass** der Sack (3) durch Warmschweißen des Randes verschlossen ist.

6. Isolierendes Bodenmaterial gemäß einem der Ansprüche 1 bis 5, **dadurch gekennzeichnet, dass** der Sack (3) in einer Quaderform ausgebildet ist, vorzugsweise in einer Form eines Flachquaders.

7. Isolierendes Bodenmaterial gemäß einem der Ansprüche 1 bis 6, **dadurch gekennzeichnet, dass** der Sack (3) bis zu maximal 95 % seines Volumens gefüllt ist.

8. Isolierendes Bodenmaterial gemäß einem der Ansprüche 1 bis 7, **dadurch gekennzeichnet, dass** der Krümel (2) als Kunststoffrecyclat durch mittlere Fraktion gebildet ist, die kleiner als mittlere Fraktion aus Gummikrümel (1) ist.

9. Isolierendes Bodenmaterial gemäß einem der Ansprüche 1 bis 8, **dadurch gekennzeichnet, dass** der Krümel (2) aus Kunststoffrecyclat ein Abfall aus der Isolierung der elektrischen Kabel mit einer Fraktion von 0,2 mm bis 1 mm ist.

10. Isolierendes Bodenmaterial gemäß Anspruch 9, **dadurch gekennzeichnet, dass** die Isolierung der elektrischen Kabel aus einem der folgenden Materialien besteht: Polyvinylchlorid, Hoch- oder Niederdruck-Polyethylen, Polyurethan, Polyamid, Polybutylentetraphthalat, Polytetrafluorethylen, Tetrafluorethylen-Hexafluorpropylen, Ethylen-Tetrafluorethylen, Perfluoralkoxypolymer, Kautschuk-Chloropren, Kautschuk-Silikon, Ethylen-Vinylacetat, Ethylen-Propylen-Kautschuk, Elastomer aus thermoplastischem Polyolefin oder Polyester, Copolymer aus Styrol und Triblock.

11. Isolierendes Bodenmaterial gemäß einem der Ansprüche 1 bis 10, **dadurch gekennzeichnet, dass** der Krümel (2) aus Kunststoffrecyclat eine Fraktion von 2 mm bis 10 mm aufweist und aus Polypropylen ist.

12. Isolierendes Bodenmaterial gemäß einem der Ansprüche 9 bis 11, **dadurch gekennzeichnet, dass** es aus Gummikrümel (1) mit einer Fraktion von 5 mm bis 15 mm, aus einem Abfall aus der Isolierung der elektrischen Kabel mit einer Fraktion von 0,2 mm bis 1 mm und/oder aus Polypropylen mit einer Fraktion von 2 mm bis 10 mm besteht, vorzugsweise hat der Gummikrümel (1) einen Anteil von 20 Gew.-% bis 30 Gew.-%, vorzugsweise hat der Abfall aus der Isolierung der elektrischen Kabel einen Anteil von 20 Gew.-% bis 30 Gew.-% oder das Polypropylen hat einen Anteil von 45 Gew.-% bis 55 Gew.-%.

13. Verfahren zur Herstellung eines isolierenden Bodenmaterials, das die Desintegration des Gummimaterials umfasst, **dadurch gekennzeichnet, dass** das gebrauchte oder abfallende Gummimaterial zu Gummikrümel (1) mit einer Teilchengröße von 2 mm bis 20 mm zerkleinert wird, ohne Pressen in Säcke (3) gefüllt wird, die Säcke (3) versiegelt und zu einem Fachquader geformt werden, wobei der Sack (3) Bestandteil der resultierenden Isolierschicht ist.

14. Verfahren zur Herstellung eines isolierenden Bodenmaterials gemäß Anspruch 13 **dadurch gekennzeichnet, dass** in einem langsam laufenden Mahlwerk (4) die Reifen zunächst in Stücke von 8 bis 20 cm Größe zerkleinert werden, anschließend werden diese Stücke zu einer Wellenmühle (5) gefördert, wo sie in Gummikrümel (1) mit erforderlicher Fraktion getrennt werden, zu Gummikrümel (1) wird vorzugsweise in einer Mischvorrichtung Granulat aus elektrischer Leiterisolierung und/oder Granulat aus Polypropylenschaum zugesetzt.

15. Verfahren zur Herstellung eines isolierenden Bodenmaterials gemäß einem der Ansprüche 13 bis 14 **dadurch gekennzeichnet, dass** der Gummikrümel (1) oder die Mischung mit der Gummikrümel (1) mittels einer Verpackungsvorrichtung in Säcke (3) gefüllt wird, vorzugsweise mit einem Fassungsvermögen der Säcke (3) von 20 Litern und/oder 40 Litern.

## Revendications

1. Un matériau isolant pour sols situé entre les couches de support et d'étalement du sol ou du plafond qui comprend au moins 20% en poids de caoutchouc recyclé granulé miettes (1) de fraction de 2 à 20 mm, et pour le reste, il comprend des miettes de plastique recyclé (2) de fraction jusqu'à 15 mm sans liant,
**caractérisé en ce que**
il comprend également un sac fermé (3) où sont placées les miettes de caoutchouc (1) et de plastique (2),
où le matériau d'un sac (3) fait partie de la couche isolante finale et limite de manière souple la forme extérieure du matériau isolant pour sol après qu'il est placé sur la surface isolée,
tandis que le sac (3) a des ouvertures qui sont plus petites que la limite inférieure de la fraction des miettes de caoutchouc (1) à l'intérieur du sac (3).

2. Le matériau isolant pour sols selon la revendication 1 **caractérisé en ce qu'**il comprend au moins 25% en poids du caoutchouc recyclé granulé miettes (1) de préférence 50% en poids.

3. Le matériau isolant pour sols selon la revendication 1 ou 2 **caractérisé en ce que** la fraction du caoutchouc recyclé granulé miettes (1) est de 5 à 15 mm

4. Le matériau isolant pour sols selon quelconque des revendications 1 à 3 **caractérisé en ce que** le matériau composant le sac (3) est du film souple de 1 mm de l'épaisseur de préférence de 0,5 mm, et de préférence particulière, le sac (3) est en feuille de polyéthylène.

5. Le matériau isolant pour sols selon quelconque des revendications 1 à 4 **caractérisé en ce que** le sac (3) est fermé par thermo soudage du bord.

6. Le matériau isolant pour sols selon quelconque des revendications 1 à 5 **caractérisé en ce que** le sac (3) est formé en bloc parallélépipédique, de préférence en bloc parallélépipédique plat.

7. Le matériau isolant pour sols selon quelconque des revendications 1 à 6 **caractérisé en ce que** le sac (3) est rempli à 95% maximum de son volume.

8. Le matériau isolant pour sols selon quelconque des revendications 1 à 7 **caractérisé en ce que** les miettes de plastique recyclé (2) sont formées en fraction moyenne inférieure à la fraction des miettes de caoutchouc (1).

9. Le matériau isolant pour sols selon quelconque des revendications 1 à 8 **caractérisé en ce que** les miettes de plastique recyclé (2) sont déchets de l'isolations des câbles électriques avec fraction de 0,2 à 1 mm.

10. Le matériau isolant pour sols selon la revendication 9 **caractérisé en ce que** l'isolation des câbles électriques est composée d'un des matériaux suivants: polychlorure de vinyle, polyéthylène haute pression ou basse pression, polyuréthane, polyamide, téréphtalate de polybutylène, polytétrafluoroéthylène, tétrafluorethylène-hexafluorpropylène, éthylène-tétrafluoréthyléne, perfluoralkoxypolymère, chloroprène de caoutchouc, silicone de caoutchouc, éthylène-acétate de vinyle, caoutchouc éthylène propylène, élastomère polyoléfine thermoplastique ou élastomère polyester thermoplastique, copolymère de styrène et de tribloc.

11. Le matériau isolant pour sols selon quelconque des revendications 1 à 10 **caractérisé en ce que** la fraction des miettes de plastique recyclé (2) est de 2 mm à 10 mm et est en polypropylène.

12. Le matériau isolant pour sols selon quelconque des revendications 9 à 11 **caractérisé en ce qu'**il consiste en caoutchouc recyclé granulé miettes (1) de fraction de 5 mm à 15 mm, en déchets de l'isolation des câbles électriques de fraction de 0,2 mm à 1 mm et/ou en polypropylène de fractions de 2 mm à 10 mm, de préférence du caoutchouc recyclé granulé miettes (1) représente de 20% à 30% en poids., des déchets de l'isolation représente 20% à 30% en poids de préférence, et de la polypropylène représente 45% à 55% en poids..

13. Le mode de la fabrication du matériau isolant pour sols qui comprend la décomposition du matériau caoutchouc **caractérisé en ce que** le matériau caoutchouc usé ou déchets est broyé en granulé miettes (1) en particules de taille de 2 à 20 mm, est rempli dans des sacs (3) sans pression, les sacs (3) sont enfermés et formés en bloc parallélépipédique plat (3) et font partie de la couche isolante résultante.

14. Le mode de la fabrication du matériau isolant pour sols selon la revendication 13, **caractérisé en ce que** dans un broyeur à basse vitesse (4) les pneus sont d'abord broyés en morceaux de taille de 8 à 20 cm, puis ces morceaux sont transportés vers un broyeur à arbre (5) où ils sont transformées en miettes de caoutchouc (1) de fraction demandée , aux miettes de caoutchouc (1) sont ajoutés des granulés d'isolation de câbles électriques et/ou des granulés de mousse de polypropylène, de préférence dans un dispositif de mélange.

15. Le mode de la fabrication du matériau isolant pour sols selon les revendications 13 à 14 **caractérisé en ce que** les miettes de caoutchouc (1) ou le mélange comprenant des miettes de caoutchouc (1) sont remplis aux sacs (3) par dispositif de remplissage, le volume des sacs (3) est de préférence 20 litres et/ou 40 litres.
